# EUROPÄISCHE PATENTSCHRIFT

(11) **EP 1 468 963 B1**
(45) Veröffentlichungstag und Bekanntmachung des Hinweises auf die Patenterteilung: **29.04.2009**
(21) Anmeldenummer: 04006315.8
(22) Anmeldetag: 17.03.2004
(51) Int. Cl.: C02F 1/28, C02F 1/42, E03B 3/02, B01D 24/20, B01D 24/22, B01D 24/24, E04D 13/08

(54) **Anordnung zur Entfernung von Metallen aus Dachablaufwässern**
System for removing metals from roof runoff waters
Système d'élimination des métaux des eaux provenant des toitures

(30) Priorität: 10.04.2003 DE 20305809 U
(43) Veröffentlichungstag der Anmeldung: 20.10.2004
(73) Patentinhaber: KME Germany AG & Co. KG, 49074 Osnabrück (DE)
(72) Erfinder: Priggemeyer, Sonja, Dr., 49134 Wallenhorst (DE); Priggemeyer, Stefan, Dr., 49134 Wallenhorst (DE); Harnischmacher, Werner, Dr., 49078 Osnabrück (DE); Dettmer, Frank, 49082 Osnabrück (DE); Lehmann, Burkhart, Dr., 49124 Georgsmarienhütte (DE); Runde, Herbert, 48268 Greven (DE)
(74) Vertreter: Pietrzykowski, Anja

(56) Entgegenhaltungen:
- EP-A- 0 866 193
- DE-A- 3 812 136
- DE-A- 19 859 386
- US-A- 249 538
- US-A- 5 707 527

## Beschreibung

Die Erfindung betrifft eine Anordnung zur Entfernung von Metallen aus Dachablaufwässern gemäß den Merkmalen im Oberbegriff des Patentanspruchs 1.

Im Zuge eines gesteigerten Umweltbewusstseins und einer verstärkten Schonung der natürlichen Wasserrecourcen wird das von Dächern ablaufende Regenwasser nicht mehr grundsätzlich über die Kanalisation einer Kläranlage zugeführt, sondem in zunehmendem Umfang aufgefangen. Es wird dann häufig zur Garten- oder Teichbewässerung oder auch im Haushalt als Brauchwasser, z.B. zur Toilettenspülung, eingesetzt. Besonders interessant ist jedoch die unter dem Begriff dezentrale Regenwasserbewirtschaftung bekannte Versickerung über Bodenpasagen zur Grundwasserneubildung, zum Hochwasserschutz und zur Kostenreduzierung der Abwasserkanalnetze.

Üblicherweise wird Regenwasser als Dachablaufwasser gesammelt. Es enthält somit neben atmosphärischen Depositionen auch Einträge von sich auf den Dachflächen sammelnden Stäuben aus der Umgebung oder Einträge durch die Bedachungsmaterialien.

Es ist bekannt, dass metallische Werkstoffe, wie z.B. Zink, Blei oder Kupfer, die als Bedachungsmaterialien oder bei Konstruktionen zur Dachentwässerung eingesetzt werden, durch die Einwirkung von Luft und Regen der Korrosion unterliegen. Die hierbei erfolgende Abgabe von Metallen an die Dachablaufwässer ist von verschiedenen Faktoren abhängig, unter anderem von der Intensität und der Menge des jeweiligen Niederschlags.

Zur Entfernung von Metallen aus Dachablaufwässern ist im Umfang der DE 198 59 386 A1 vorgeschlagen worden, einen Filter mit einem Filtermaterial aus synthetisierten oder natürlich vorkommenden kristallinen hydratisierten Alumosilikaten mit einer Gerüststruktur zu verwenden, die Alkali- oder Erdalkali-ionen enthalten. Ein solcher Filter wird unmittelbar einer Dachentwässerung, beispielsweise in Form eines Regenfallrohrs, zugeordnet. Vorteilhaft hierbei ist, dass ein derartiges Filtermaterial leicht handhabbar, kostengünstig, regenerierbar und hygienisch unbedenklich ist. Die so gereinigten Dachablaufwässer können dann für verschiedene Zwecke im Haushalt oder zur Garten- bzw. Teichbewässerung genutzt werden, ohne dass dies die Umwelt in einem merklichen Umfang belastet. Auch ermöglicht es der bekannte Vorschlag, dass Dachablaufwässer problemlos in Böden versickern oder in natürliche Gewässer eingeleitet werden können.

Durch erneuten Ionenaustausch kann metallbeladenes Filtermaterial regeneriert und wieder in Filter eingesetzt werden. So werden die Kosten für den Ionenaustausch möglichst gering gehalten und natürliche Ressourcen geschont. Weiterhin können die gebundenen Metalle derart zurückgewonnen werden, dass sie wieder einer Nutzung zugeführt werden können und Abfälle in einem vernachlässigbaren Umfang entstehen.

Ein weiterer Vorschlag unter Nutzung der vorstehend beschriebenen Eigenschaften findet sich in dem Prospektblatt KME 11/00 3000 01 01 "TECU®-Fallrohrfilter" der KM Europa Metal AG, Osnabrück. Bei diesem Fallrohrfilter ist unterhalb des Filtermaterials ein nach oben konisches Lochblech aus Edelstahl vorgesehen. Hierbei sind sowohl die Anzahl als auch die Größe der Löcher des Lochblechs begrenzt. Dadurch kann nur eine begrenzte Menge an Dachablaufwässern, die im Filtermaterial behandelt worden sind, durchtreten. Ferner ergeben sich bei diesem Vorschlag Probleme dadurch, dass das Außenrohr der Filterpatrone aus Kunststoff besteht. Mithin traten Schwierigkeiten bei der Werkstoffpaarung Edelstahl-Kunststoff auf.

Im Hinblick auf den Sachverhalt, dass der sich oberhalb des Filtermaterials befindende Filterstrumpf (Vorfilter) von einer in radialer Richtung nur gering distanzierten, unten offenen Hülse ummantelt wird, gelangen die Dachablaufwässer auf eine nur kleine Ringfläche des Filtermaterials benachbart zum Innenrohr. Die Verteilung der Dachablaufwässer erfolgt dann erst im weiteren Längenverlauf des Filters. Aufgrund dessen wird der Filter im oberen Höhenbereich nicht optimal ausgenutzt.

Aus der US-A 249538 ist ein Fallrohrfilter bekannt, bei welchem oberhalb eines in einem Ringspalt angeordneten ersten Filterbetts ein Sieb als Vorfilter ausgebildet ist.

Der Erfindung liegt - ausgehend vom Stand der Technik - die Aufgabe zugrunde, eine Anordnung zur Entfernung von Metallen aus Dachablaufwässern zu schaffen, die eine deutlich bessere Ausnutzung des Filtermaterials gewährleistet.

Diese Aufgabe wird mit den im kennzeichnenden Teil des Patentanspruchs 1 angegebenen Merkmalen gelöst.

Dadurch, dass der Ringspalt zwischen dem Außenrohr und dem Innenrohr am unteren Ende geschlossen ist, werden die durch den Kontakt mit dem Filtermaterial behandelten Dachablaufwässer gezwungen, durch die mindestens im Höhenbereich des Einlauftrichters befindlichen Schlitze in das Innenrohr überzutreten und von dort abzuströmen. Auch ermöglicht der sich vom Außenrohr zum Innenrohr nach unten hin verjüngende Einlauftrichter die optimale Ausnutzung des Filtermaterials.

Durch die Schlitze wird im unteren Höhenbereich der Filterpatrone ein ausreichend großer Durchtrittsquerschnitt für die gefilterten Dachablaufwässer geschaffen. Dabei wird durch eine entsprechende Breiten- und Längenbemessung der Schlitze Sorge dafür getragen, dass eine Verstopfung so gut wie ausgeschlossen werden kann.

Im Höhenbereich zwischen dem Vorfilter und der Oberseite des Filtermaterials erstreckt sich im Ringspalt vom Innenrohr ausgehend eine nach unten im Durchmesser vergrößernde konische Ringscheibe, deren größter Durchmesser etwa dem mittleren Durchmesser des Ringspalts entspricht, wird dafür Sorge getragen, dass die Dachablaufwässer, welche aus dem Vorfilter treten, gleichmäßiger auf das Filtermaterial verteilt werden, so dass auch schon die obersten Bereiche des Filtermaterials wirksam an einem Ionenaustausch teilnehmen.

In Weiterbildung des erfindungsgemäßen Grundgedankens ist nach Patentanspruch 2 vorgesehen, dass das Außenrohr, das Innenrohr und der Einlauftrichter aus Kunststoff gebildet sind. Dadurch ergeben sich keine Probleme bei der Verbindung von Außenrohr, Einlauftrichter und Innenrohr. Auch ist es möglich, für das Außenrohr einen Kunststoff zu wählen, der einem Betrachter visuell den Eindruck z.B. eines Kupfer- oder Zinkrohrs vermittelt.

Denkbar ist es gemäß den Merkmalen des Patentanspruchs 3 aber auch, für das Außenrohr einen farblich neutralen Kunststoff zu wählen und dafür die Filterpatrone mit einer Ummantelung aus einem Kunststoff, z.B. in Form eines Hüllrohrs, zu versehen, die farblich an eine Dachentwässerung, insbesondere aus Kupfer oder Zink, angepasst ist.

Eine vorteilhafte Ausführungsform der Erfindung kennzeichnet sich in den Merkmalen des Patentanspruchs 4. Danach verlaufen die Schlitze parallel zueinander und erstrecken sich in mindestens einer Reihe zwischen zwei im Abstand übereinander angeordneten Horizontalebenen. Bei Bedarf können auch zwei oder mehrere Reihen Schlitze im Abstand übereinander vorgesehen werden.

Zur noch besseren Vergleichmäßigung der Verteilung der Dachablaufwässer auf das Filtermaterial ist gemäß Patentanspruch 5 auf der Oberseite des Filtermaterials eine Schicht aus einem saugfähigen Material vorgesehen. Ein solches Material ist beispielsweise aufgeschäumter, saugfähiger Kunststoffschwamm. Dieses Material hat die Eigenschaft, die Dachablaufwässer aufzunehmen, in der Schicht zu verteilen und folglich gleichmäßig über die Breite des Ringspalts dem Filtermaterial zuzuführen. Außerdem ist mit einem solchen Material der Vorteil verbunden, dass es in den Dachablaufwässern noch befindliche Verunreinigungen auffängt und daher eine zusätzliche Filterwirkung erzeugt. Ferner kann dieses Material aufgrund seiner Lage oberhalb des Filtermaterials leicht ausgetauscht und gereinigt werden.

Auch der oberhalb des saugfähigen Materials befindliche Vorfilter (Filterstrumpf) ist bevorzugt auswechselbar vorgesehen und demzufolge kurzfristig zu reinigen. Der Vorfilter dient insbesondere dem Zweck, bei normalen Regenmengen, welche zumeist an den Innenseiten einer Dachentwässerung in Form eines Regenfallrohrs entlang strömen, diese gezielt nach außen zu führen und über die konische Ringscheibe auf das Filtermaterial zu lenken.

Um den Eintritt von Stäuben oder anderen Verunreinigungen in die Filterpatrone zu verhindern, ist gemäß Patentanspruch 6 zwischen einem die Dachentwässerung umschließenden Deckel der Filterpatrone und der äußeren Oberfläche der Dachentwässerung eine Dichtung vorgesehen.

Eine einwandfreie Distanz des Außenrohrs zum Innenrohr wird mit Hilfe der Merkmale des Patentanspruchs 7 erzielt. Dabei können insbesondere drei um jeweils 120° umfangsseitig verteilte schmale Stützflügel vorgesehen werden. Die Stützflügel können am Innenrohr befestigt sein und die innere Oberfläche des Außenrohrs lediglich mit Gleitkontakt berühren.

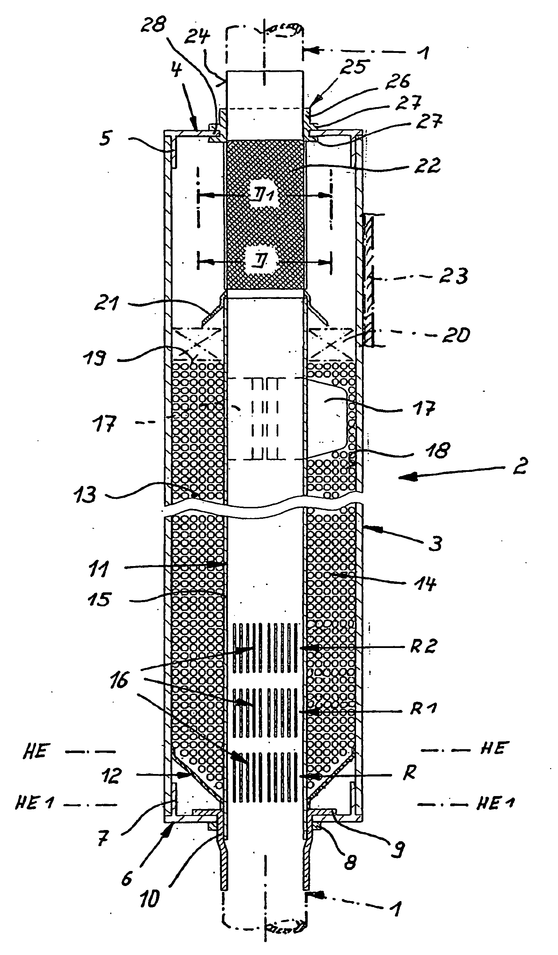

Die Erfindung ist nachfolgend anhand eines in der Zeichnung veranschaulichten Ausführungsbeispiels näher erläutert.

Mit 1 ist in der Zeichnung in strichpunktierter Linienführung eine Dachentwässerung in Form eines rohrförmigen Längenabschnitts aus z.B. Kupfer bezeichnet. In diese Dachentwässerung 1 ist eine Anordnung zur Entfernung von Metallen aus Dachablaufwässern in Form einer Filterpatrone 2 auswechselbar eingegliedert.

Die Filterpatrone 2 umfasst ein Außenrohr 3 aus Kunststoff, das von seinem optischen Charakter her an die aus Kupfer bestehende Dachentwässerung 1 angeglichen ist.

Das Außenrohr 3 weist einen die Dachentwässerung 1 umschließenden Deckel 4 mit einem in das Außenrohr 3 fassenden Stutzen 5 auf.

Zwischen der äußeren Oberfläche 24 der Dachentwässerung 1 und dem Deckel 4 der Filterpatrone 2 befindet sich eine Dichtung 25 in Form eines im Querschnitt F-förmigen Dichtrings. Diese Dichtung 25 liegt mit einem zylindrischen Längenabschnitt 26 satt an der äußeren Oberfläche 24 und umfasst mit zwei radial abstehenden Flanschen 27 den Innenrand 28 des Deckels 4.

Ferner besitzt das Außenrohr 3 am unteren Ende einen die Dachentwässerung 1 umschließenden Boden 6, der ebenfalls mit einem Stutzen 7 in das Außenrohr 3 fasst. Ein äußerer Ring 8 dient der Lageorientierung des Außenrohrs 3 an der Dachentwässerung 1.

Die sich mit einem horizontalen Flansch 9 innenseitig auf dem Boden 6 des Außenrohrs 3 abstützende Dachentwässerung 1 besitzt einen im Durchmesser erweiterten Stutzen 10 zur Verbindung mit einer Grundleitung, in den ein Innenrohr 11 der Filterpatrone 2 aus Kunststoff eingesetzt ist. Oberhalb des Flansches 9 der Dachentwässerung 1 erstreckt sich vom Innenrohr 11 zum Außenrohr 3 ansteigend ein Einlauftrichter 12 aus Kunststoff. Der Einlauftrichter 12 begrenzt den zwischen dem Außenrohr 3 und dem Innenrohr 11 gebildeten Ringspalt 13 nach unten. Er dient ferner als untere Begrenzung für das sich in dem Ringspalt 13 befindende Filtermaterial 14 zum Ionenaustausch. Dieses ist von seinem Charakter her auf die in Metall für Dacheindeckungen mit natürlich oxidierenden Oberflächen ausgelegte Dachentwässerung 1 abgestellt, beim Ausführungsbeispiel Kupfer.

Im Höhenbereich des Einlauftrichters 12 sind in die Wand 15 des Innenrohrs 11 die Wand 15 auf ihrer gesamten Dicke durchsetzende, sich vertikal erstreckende Schlitze 16 vorgesehen. Die Schlitze 16 verlaufen parallel zueinander und erstrecken sich in einer Reihe R zwischen zwei im Abstand übereinander angeordneten Horizontalebenen HE-HE und HE₁-HE₁. Mit Abstand oberhalb dieser Reihe R sind noch zwei weitere Reihen R₁, R₂ parallel zueinander verlaufender und sich vertikal erstreckender Schlitze 16 in der Wand 15 des Innenrohrs 11 vorgesehen.

Im oberen Höhenbereich des Filtermaterials 14 sind drei umfangsseitig um 120° zueinander versetzte schmale Stützflügel 17 vorgesehen. Diese Stützflügel 17 sind am Innenrohr 11 befestigt und kontaktieren gleitend die innere Oberfläche 18 des Außenrohrs 3.

Auf der Oberseite 19 des Filtermaterials 14 ist eine Schicht 20 aus einem saugfähigen Material, wie beispielsweise aufgeschäumter Kunststoffschwamm, vorgesehen.

Oberhalb der saugfähigen Schicht 20 erstreckt sich vom Innenrohr 11 ausgehend eine sich nach unten im Durchmesser vergrößernde konische Ringscheibe 21. Der größte Durchmesser D der Ringscheibe 21 entspricht etwa dem mittleren Durchmesser D₁ des Ringspalts 13.

Im Bereich zwischen dem Deckel 4 des Außenrohrs 3 und der konischen Ringscheibe 21 ist ein Vorfilter 22 in Form eines Filterstrumpfs vorgesehen.

In der Zeichnung ist in strichpunktierter Linienführung noch angedeutet, dass die Filterpatrone 2 dann mit einer Ummantelung 23 in Form z.B. eines Hüllrohrs aus Kunststoff versehen sein kann, wenn das Außenrohr 3 aus einem neutralen Kunststoff gebildet ist. Die Ummantelung 23 besteht dann aus einem Kunststoff, der dem Charakter der metallenen, z.B. kupfernen Dachentwässerung 1 angepasst ist.

### Bezugszeichenaufstellung

- 1 -: Dachentwässerung
- 2 -: Filterpatrone
- 3 -: Außenrohr v. 2
- 4 -: Deckel v. 3
- 5 -: Stutzen an 4
- 6 -: Boden v. 3
- 7 -: Stutzen an 6
- 8 -: Ring
- 9 -: Flansch v. 1
- 10 -: Stutzen v. 1
- 11 -: Innenrohr v. 2
- 12 -: Einlauftrichter
- 13 -: Ringspalt
- 14 -: Filtermaterial
- 15 -: Wand v. 11
- 16 -: Schlitze in 15
- 17 -: Stützflügel
- 18 -: innere Oberfläche v. 3
- 19 -: Oberseite v. 16
- 20 -: Schicht
- 21 -: Ringscheibe
- 22 -: Vorfilter
- 23 -: Ummantelung
- 24 -: äußere Oberfläche v. 1
- 25 -: Dichtung zw. 4 u. 24
- 26 -: zylindrischer Längenabschnitt v. 25
- 27 -: Flansche v. 25
- D -: Durchmesser v. 21
- D₁ -: Durchmesser v. 13
- HE-HE -: Horizontalebene
- HE₁-HE₁ -: Horizontalebene
- R -: Reihe mit 16
- R₁-R₁ -: Reihe mit 16
- R₂-R₂ -: Reihe mit 16

## Patentansprüche

1. Anordnung zur Entfernung von Metallen aus Dachablaufwässern, welche in Form einer Filterpatrone (2) in einen rohrförmigen Längenabschnitt einer Dachentwässerung (1) auswechselbar eingegliedert ist und ein Außenrohr (3) sowie ein zum Außenrohr (3) distanziertes Innenrohr (11) aufweist, die einen mit Metalle austauschendem Filtermaterial (14) mindestens teilweise befüllten Ringspalt (13) begrenzen, wobei im Innenrohr (11) oberhalb des Filtermaterials (14) ein Vorfilter (22) vorgesehen ist und wobei das untere Ende des Ringspalts (13) durch einen sich vom Außenrohr (3) zum Innenrohr (11) nach unten hin verjüngenden Einlauftrichter (12) verschlossen ist, **dadurch gekennzeichnet, dass** mindestens im Höhenbereich des Einlauftrichters (12) die Wand (15) des Innenrohrs (11) auf ihrer gesamten Dicke durchsetzende, sich vertikal erstreckende Schlitze (16) vorgesehen sind und dass sich im Höhenbereich zwischen dem Vorfilter (22) und der Oberseite (19) des Filtermaterials (14) im Ringspalt (13) vom Innenrohr (11) ausgehend eine sich nach unten im Durchmesser vergrößernde konische Ringscheibe (21) erstreckt, deren größter Durchmesser (D) etwa dem mittleren Durchmesser (D₁) des Ringspalts (13) entspricht.

2. Anordnung nach Patentanspruch 1, **dadurch gekennzeichnet, dass** das Außenrohr (3), das Innenrohr (11) und der Einlauftrichter (12) aus Kunststoff gebildet sind.

3. Anordnung nach Patentanspruch 1 oder 2, **dadurch gekennzeichnet, dass** die Filterpatrone (2) mit einer Ummantelung (23) aus Kunststoff versehen ist.

4. Anordnung nach einem der Patentansprüche 1 bis 3, **dadurch gekennzeichnet , dass** die Schlitze (16) parallel zueinander verlaufen und sich in mindestens einer Reihe (R) zwischen zwei im Abstand übereinander angeordneten Horizontalebenen (HE-HE, HE₁-HE₁) erstrecken.

5. Anordnung nach einem der Patentansprüche 1 bis 4, **dadurch gekennzeichnet , dass** auf der Oberseite (19) des Filtermaterials (14) eine Schicht (20) aus einem saugfähigen Material vorgesehen ist.

6. Anordnung nach einem der Patentansprüche 1 bis 5, **dadurch gekennzeichnet, dass** zwischen einem die Dachentwässerung (1) umschließenden Deckel (4) der Filterpatrone (2) und der äußeren Oberfläche (24) der Dachentwässerung (1) eine Dichtung (25) vorgesehen ist.

7. Anordnung nach einem der Patentansprüche 1 bis 6, **dadurch gekennzeichnet, dass** das Außenrohr (3) zum Innenrohr (11) durch sich vom Innenrohr (11) aus radial erstreckende Stützflügel (17) distanziert ist.

## Claims

1. Arrangement for removing metals from roof waste water, which is replaceably incorporated in the form of a filter cartridge (2) in a tubular longitudinal portion of a roof drainage system (1) and has an outer pipe (3) and an inner pipe (11) that is distanced from the outer pipe (3), which delimit an annular gap (13) which is at least partially filled with filter material (14) exchanging metals, a pre-filter (22) being provided in the inner pipe (11) above the filter material (14) and the lower end of the annular gap (13) being closed by an inlet funnel (12) tapering downwardly from the outer pipe (3) to the inner pipe (11), **characterised in that** at least in the height region of the inlet funnel (12), the wall (15) of the inner pipe (11) is provided over its entire thickness with penetrating, vertically extending slots (16) and that in the height region between the pre-filter (22) and the upper side (19) of the filter material (14) in the annular gap (13) proceeding from the inner pipe (11), there extends a conical annular disc (21) which increases downwardly in diameter, the largest diameter (D) of which approximately corresponds to the mean diameter (D₁) of the annular gap (13).

2. Arrangement according to claim 1, **characterised in that** the outer pipe (3), the inner pipe (11) and the inlet funnel (12) are formed from plastics material.

3. Arrangement according to claim 1 or 2, **characterised in that** the filter cartridge (2) is provided with a sheathing (23) made of plastics material.

4. Arrangement according to any one of claims 1 to 3, **characterised in that** the slots (16) run in parallel to one another and extend in at least one row (R) between two horizontal planes (HE-HE, HE₁-HE₁) arranged at a spacing one above the other,

5. Arrangement according to any one of claims 1 to 4, **characterised in that** a layer (20) made of an absorbent material is provided on the upper side (19) of the filter material (14).

6. Arrangement according to any one of claims 1 to 5, **characterised in that** a seal (25) is provided between a lid (4) of the filter cartridge (2) surrounding the roof drainage system (1) and the outer surface (24) of the roof drainage system (1).

7. Arrangement according to any one of claims 1 to 6, **characterised in that** the outer pipe (3) is distanced from the inner pipe (11) by support wings (17) extending radially from the inner pipe (11).

## Revendications

1. Dispositif pour éliminer les métaux des eaux de ruissellement de toitures, se présentant sous la forme d'une cartouche de filtre (2) intégrée de manière remplaçable dans un segment d'une longueur de tube de descente d'eau (1) ; il comprend :
- un tuyau extérieur (3) et
- un tuyau intérieur (11) écarté du tuyau extérieur (3) pour délimiter un intervalle annulaire (13) rempli au moins en partie d'un matériau filtrant (14) échangeant les métaux,
l'extrémité inférieure de l'intervalle annulaire (13) étant fermée par une trémie d'entrée (12) allant en diminuant à partir du tuyau extérieur (3) vers le tuyau intérieur (11),
**caractérisé en ce qu'**
au moins à la hauteur de la trémie d'entrée (12), la paroi (15) du tuyau intérieur (11) comporte des fentes (13) verticales, qui traversent toute l'épaisseur, et
dans la zone située en hauteur entre le préfiltre (22) et le côté supérieur (19) de la matière filtrante (14) dans l'intervalle annulaire (13), et partant du tuyau intérieur (11), un disque annulaire (21), conique, augmente de diamètre vers le bas, son plus grand diamètre (D) correspondant sensiblement au diamètre moyen (D₁) de l'intervalle annulaire (13) .

2. Dispositif selon la revendication 1,
**caractérisé en ce que**
le tuyau extérieur (3), le tuyau intérieur (11) et la trémie d'entrée (12) sont en matière plastique.

3. Dispositif selon la revendication 1 ou 2,
**caractérisé en ce que**
la cartouche filtrante (2) est munie d'une enveloppe (23) en matière plastique.

4. Dispositif selon les revendications 1 à 3,
**caractérisé en ce que**
les fentes (16) sont parallèles les unes aux autres et s'étendent au moins sur une rangée (R) entre deux plans horizontaux (HE-HE, HE₁-HE₁) superposés avec un intervalle.

5. Dispositif selon les revendications 1 à 4,
**caractérisé en ce qu'**
une couche (20) d'une matière absorbante est prévue sur le côté supérieur (19) de la matière filtrante (14).

6. Dispositif selon les revendications 1 à 5,
**caractérisé par**
un joint (25) entre le couvercle (4) de la cartouche filtrante (2) qui entoure la descente d'eau (1) et la surface extérieure (24) de la descente d'eau (1).

7. Dispositif selon les revendications 1 à 6,
**caractérisé en ce que**
le tuyau extérieur (3) est écarté du tuyau intérieur (11) par des ailettes d'appui (17), radiales, partant du tuyau intérieur (11).
